# EUROPÄISCHE PATENTSCHRIFT

(11) **EP 1 390 764 B1**
(45) Veröffentlichungstag und Bekanntmachung des Hinweises auf die Patenterteilung: **27.02.2008**
(21) Anmeldenummer: 02740661.0
(22) Anmeldetag: 29.05.2002
(51) Int. Cl.: G01P 3/48, H02P 7/00

(54) **VERFAHREN ZUM BESTIMMEN DER FREQUENZ DER IM ANKERSTROMSIGNAL EINES KOMMUTIERTEN GLEICHSTROMMOTORS ENTHALTENEN STROMRIPPEL**
METHOD FOR DETERMINING THE FREQUENCY OF THE CURRENT RIPPLE IN THE ARMATURE CURRENT OF A COMMUTATED D.C MOTOR
PROCEDE POUR DETERMINER LA FREQUENCE DES ONDULATIONS DE COURANT CONTENUES DANS LE SIGNAL DE COURANT D'INDUIT D'UN MOTEUR A COURANT CONTINU COMMUTE

(30) Priorität: 30.05.2001 DE 10126168
(43) Veröffentlichungstag der Anmeldung: 25.02.2004
(73) Patentinhaber: Leopold Kostal GmbH & Co. KG, 58507 Lüdenscheid (DE)
(72) Erfinder: GERLACH, Tobias, 58119 Hagen (DE)
(86) Internationale Anmeldenummer: PCT/EP2002/005877
(87) Internationale Veröffentlichungsnummer: WO 2002/097448

(56) Entgegenhaltungen:
- EP-A- 1 043 590

## Beschreibung

Die Erfindung betrifft ein Verfahren zum Bestimmen der Frequenz der im Ankerstromsignal eines kommutierten Gleichstrommotors enthaltenen Stromrippel.

Das Ankerstromsignal eines kommutierenden Gleichstrommotors umfaßt einen Gleichanteil sowie einen den Gleichanteil überlagernden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen Stromspitzen - im folgenden Stromrippel genannt - treten bei einer Umdrehung des Ankers in einer der Anzahl der Kollektorlamellen entsprechenden Häufigkeit auf. Weist beispielsweise der Anker zehn Kollektorlamellen auf, sind im Ankerstromsignal entsprechend zehn Stromrippel zu erkennen. Eine Zählung der Stromrippel kann somit Aufschluß über die aktuelle Drehstellung des Ankers des Gleichstrommotors und somit bezüglich des von ihm angetriebenen Elements innerhalb seiner vorbestimmten Bewegungsstrecke geben. Zu diesem Zweck wird das analoge Ankerstromsignal digitalisiert, um eine entsprechende Zählung vornehmen zu können. Die Anzahl der abgezählten Stromrippel in einem bestimmten Zeitintervall gibt als Stromrippelfrequenz Aufschluß über die aktuelle Drehzahl des Gleichstrommotors.

Um eine möglichst fehlerfreie Stromrippeldetektion durchführen zu können, wird das analoge Ankerstromsignal vor und ggf. auch nach seiner Digitalisierung zum Unterdrücken von Störeinflüssen entsprechend aufbereitet. Zur Aufbereitung des Ankerstromsignales werden Filterungen durchgeführt, die als Tiefpaßfilterung und/oder als Frequenzfilterungen ausgestaltet sind. Ein derartiges Signalaufbereitungsverfahren ist beispielsweise beschrieben in DE 195 11 307 C1. Sinn und Zweck derartiger Signalaufbereitungsverfahren ist es, ein präzises Ankerstromsignal, möglichst befreit von Störeinflüssen, bereitzustellen, damit dieses aufbereitete Ankerstromsignal anschließend im Hinblick auf die darin enthaltenen Stromrippel ausgewertet werden kann. Zur Positionsbestimmung werden die Rippel gezählt, da das Zählergebnis unmittelbar Aufschluß über die aktuelle Drehstellung der Antriebswelle bzw. des Ankers des Gleichstrommotors gibt. Zum Zählen der in dem Ankerstromsignal enthaltenen Stromrippel werden üblicherweise Minima- oder Maxima-Bestimmungsalgorithmen oder solche zur Bestimmung der Nulldurchgänge eingesetzt.

Mit den vorbekannten Signalaufbereitungs- und Korrekturverfahren lassen sich im Ankerstromsignal enthaltene Störeinflüsse jedoch nur dann hinreichend beseitigen oder minimieren, wenn die im Ankerstromsignal enthaltenen Stromrippel prägnant im Ankerstromsignal vorhanden sind. Problematisch, wenn nicht sogar unmöglich ist eine Auswertung der im Ankerstrom enthaltenen Stromrippel, wenn diese durch Störfrequenzeinflüsse überlagert sind, die sich auch dadurch bemerkbar machen können, daß das Stromrippelsignal einem in seiner Frequenz und Amplitude zufällig veränderlichen Störfrequenz, beispielsweise infolge von Spannungsschwankungen aufmodelliert sein kann.

Ebenfalls bekannt aus EP 1 043 590 A1 ist ein Verfahren zur Messung der Drehzahl eines Gleichstrom-Kommutatormotors. Die Drehzahl wird anhand einer Frequenzanalyse von einem Motorsignal ermittelt.

Ausgehend von diesem diskutierten Stand der Technik liegt der Erfindung daher die Aufgabe zugrunde, ein vereinfachtes Verfahren zum Bestimmen der Frequenz der im Ankerstromsignal eines kommutierten Gleichstrommotors enthaltenen Stromrippel vorzuschlagen, bei dem auch eine sichere Frequenz- bzw. Drehzahlbestimmung erfolgen kann, wenn das Stromrippelsignal von Störfrequenzeinflüssen überlagert ist.

Diese Aufgabe wird erfindungsgemäß dadurch gelöst, daß die Bestimmung der Frequenz der im Ankerstromsignal enthaltenen Stromrippel über eine Differenzbildung zwischen dem durch eine Spektralanalyse des Ankerstromsignals gewonnenen Ergebnis und dem Ergebnis einer weiteren Spektralanalyse einer elektrischen Motorbetriebsgröße erfolgt.

Bei dem erfindungsgemäßen Verfahren erfolgt eine Bestimmung der Stromrippelfrequenz im Ankerstromsignal durch eine Differenzbildung zwischen den Ergebnissen von zwei unabhängig voneinander durchgeführten Spektralanalysen. Zumindest eines der Ergebnisse der beiden Spektralanalysen ist aus dem Ankerstromsignal gewonnen worden. Das Ergebnis der weiteren Spektralanalyse ist ein entsprechendes, der eine weitere elektrische Motorbetriebsgröße zugrunde gelegt ist, beispielsweise die Motorspannung. In diesem Fall machen sich in den Spektralanalysen, die beispielsweise mittels einer Fast-Fourier-Transformation des Ankerstromsignals bzw. des Motorspannungsignals in seinen jeweiligen Frequenzbereich ermittelt worden sind, Störfrequenzen in gleicher Weise bemerkbar. Dem gegenüber machen sich die Stromrippel mehr oder weniger ausschließlich, zumindest jedoch in deutlich stärkerem Maße in der Spektralanalyse bemerkbar, in durch die das Ankerstromsignal transformiert worden ist, nicht jedoch in dem Ergebnis der aus dem Motorspannungssignal gewonnenen Spektralanalyse. Durch eine Differenzbildung der Ergebnisse dieser beiden Spektralanalysen werden die Störfrequenzanteile, die sich in den Ergebnissen der beiden Spektralanalysen gleichermaßen bemerkbar machen, eliminiert mit dem Ergebnis, daß lediglich die aktuelle Stromrippelfrequenz für eine weitere Auswertung übrig bleibt. Durch diese Subtraktion werden somit sämtliche Schwingungen eliminiert, die nicht kommutierungsbedingt sind, sondern originär von den Verzerrungen im Spannungssignal herrühren. Dabei wirken sich eventuelle, durch den jeweiligen Betriebszustand des Gleichstrommotors bedingte Phasenverschiebungen der Frequenzanteile nicht aus, da der Gleichstrommotor keine Verschiebung von Frequenzanteilen vornimmt. Vielmehr fügt er selbst neue hinzu, nämlich die Stromrippel. Daher ist mit dem erfindungsgemäßen Verfahren nicht nur die Frequenz der im Ankerstromsignal enthaltenen Stromrippel auch bei einer Überlagerung durch Störfrequenzeinflüsse ermittelbar. Vielmehr ist auch eine Stromrippelfrequenzerkennung und eine sich daran anschließende Drehzahl- und Positionsbestimmung der Ankerwelle des Gleichstrommotors möglich, wenn Spannungsschwankungen auftreten. Die Differenzbildung kann bei einer solchen Ausgestaltung, bei der in die Differenzbildung die Ergebnisse von Spektralanalysen zum einen das Ankerstromsignal und zum anderen das Motorspannungssignal eingehen, zeitgleich und somit mit den Daten desselben Abtastzeitpunktes vorgenommen werden.

In einem weiteren Ausführungsbeispiel ist vorgesehen, daß in beide voneinander zu subtrahierende Spektralanalysen das Ankerstromsignal eingeht, wobei in diesem Falle sicherzustellen ist, daß das den Spektralanalysen zugrunde gelegte Ankerstromsignal in unterschiedlichen Betriebszuständen des Gleichstrommotors erfaßt worden ist. Beispielsweise können die Spektralanalaysen bei unterschiedlicher Drehzahl des Gleichstrommotors durchgeführt werden. Die Spektralanalysen basieren dann auf Ankerstromdaten, die zeitlich voneinander beabstandet sind. Bei dieser Ausgestaltung wird davon ausgegangen, daß die Störfrequenzen innerhalb des zweckmäßigerweise kleinen Zeitintervalls zwischen der Erstellung der ersten und der zweiten Spektralanalyse etwa konstant ist. Die Bestimmung der Stromrippelfrequenz kann beispielsweise bei jedem Anfahren des Gleichstrommotors durchgeführt werden.

Grundsätzlich kann eine solche Berechnung in jedem Takt der digitalen Abtastung der in die Auswertung eingehenden Signalkurven bestimmt werden. Bei solchen Gleichstrommotoren, die immer kurzzeitig in Betrieb sind, wie beispielsweise Fensterhebermotoren in einem Kraftfahrzeug, ist es zweckmäßig und auch ausreichend, daß eine Bestimmung der Stromrippelfrequenz bei jedem Anfahren des Gleichstrommotors durchgeführt wird.

Die auf die zuvor beschriebene Weise bestimmte Frequenz der im Ankerstromsignal enthaltenen Stromrippel kann infolge ihrer Proportionalität zur Drehzahl unmittelbar herangezogen werden, um daraus die Drehwinkelstellung der Ankerwelle des Gleichstrommotors oder eine Positionsbestimmung eines von dieser angetriebenen Elementes durchführen zu können.

Änderungen infolge des Betriebszustandes des Gleichstrommotors resultieren in einer Änderung der Frequenz der im Ankerstromsignal enthaltenen Stromrippel. Folglich sind Änderungen in der Frequenz der Stromrippel unmittelbar auf eine Drehzahländerung des Gleichstrommotors zurückzuführen.

Zum Durchführen der Spektralanalyse kann das analoge Ankerstromsignal zunächst digitalisiert und anschließend mittels einer Fast-Fourier-Transformation in seinen Frequenzsbereich transformiert werden. Diese Verfahrensschritte können wenig rechenintensiv ausgestaltet sein. Dies hat auch zur Folge, daß ohne weiteres diese Berechnungen in jedem Zeitpunkt der digitalen Abtastung des analogen Ankerstromsignals vorgenommen werden können, so daß eine Drehwinkelbestimmung der Antriebs- bzw. Ankerwelle des Gleichstrommotors in einer zeitlich sehr hohen Auflösung erfolgen kann. Folglich kann dieses Verfahren auch eingesetzt werden, um für solche Korrekturverfahren benutzt werden zu können, bei denen die aktuelle Drehzahl des Gleichstrommotors benötigt wird. Insbesondere können mit diesem Verfahren bei einer Durchführung der Verfahrensschritte im Takt der digitalen Abtastung Betriebszustandsänderungen quasi in Echtzeit erfaßt werden und somit auch in der aktuellen Drehwinkelbestimmung berücksichtigt werden.

Im Gegensatz zum vorbekannten Stand der Technik wird bei dem beanspruchten Verfahren keine Frequenzfilterung vorgenommen, sondern es erfolgt eine direkte Ermittlung der aktuellen Stromrippelfrequenz unter Ausblendung solcher Frequenzanteile, die als Störeinflüsse ggf. das Ankerstromsignal überlagern. Die Beobachtung der Stromrippelfrequenz wird bei diesem Verfahren unmittelbar ausgewertet, ohne daß zu diesem Zweck zuvor eine eigene Stromrippeldetektion oder eine besondere Signalaufbereitung grundsätzlich notwendig wäre. Daher eignet sich dieses Verfahren insbesondere auch, um eine sensorlose Positionsbestimmung bei kommutierten Gleichstrommotoren mit geringeren Anforderungen an ihre Qualität unter Ausnutzung der im Ankerstrom enthaltenen Stromrippel durchführen zu können.

Bei dem erfindungsgemäßen Verfahren kann jedoch nicht nur vorgesehen sein, die aktuelle Frequenz der Stromrippel bei einem Betrieb des Gleichstrommotors zu ermitteln und zu überwachen, sondern diese Betriebsfrequenz der im Ankerstromsignal enthaltenen Stromrippel kann ebenfalls im Hinblick auf sprunghafte Änderungen der Stromrippelfrequenz überwacht werden. Bei Auftreten von Fehl- und/oder Doppelrippeln erfolgt eine sprunghafte Änderung der aktuellen Stromrippelfrequenz, so daß anschließend bei einer Detektion einer solchen sprunghaften Änderung der aktuellen Stromrippelfrequenz eine Korrektur des Stromrippelzählergebnisses und somit der aktuellen Positionsbestimmung durchgeführt werden kann.

Die Detektion einer solchen sprunghaften Änderung der aktuellen Stromrippelfrequenz kann einer Plausibilitätskontrolle unterworfen werden, etwa über die Dauer der Frequenzänderung oder über den Frequenzsprung, um auf diese Weise eine Interpretation von nicht durch Stromrippel induzierten Frequenzen zu vermeiden. Mit einem solchen Korrekturverfahren ist es somit auf einfache Weise möglich, eine Korrektur von auftretenden Fehl- und/oder Doppelrippeln vorzunehmen, ohne daß zu diesem Zweck aufwendige und rechenintensive Algorithmen zum Erkennen von Fehl- und/oder Doppelrippeln durchgeführt werden müßten.

Die Erfindung ist nachfolgend nochmals anhand der Figuren erläutert. Es zeigen:

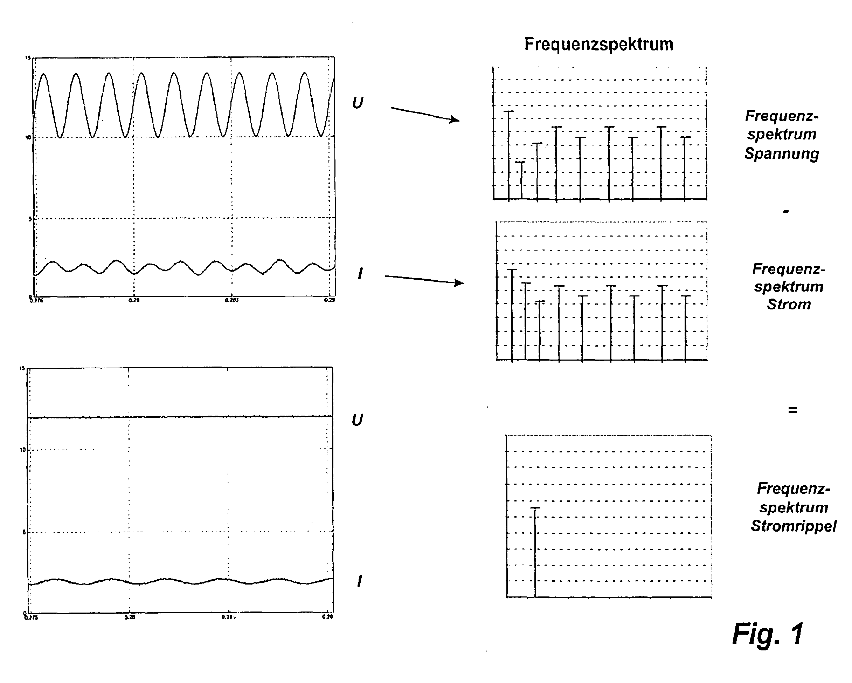

- **Fig. 1:**: Ein Diagramm zum Darstellen der Differenzbildung von den Ergebnissen zweier Spektralanalysen zur Ermittlung der Stromrippelfrequenz in dem Ankerstromsignal eines kommutierten Gleichstrommotors.

Bei einem kommutierten Gleichstrommotor wird das Motorspannungs- und Motorstromsignal überwacht. Die Signalkurven der Motorspannung und des Motorstroms sind in dem Diagramm der Figur 1 oben links wiedergegeben, wobei die Motorspannungskurve mit U und die Motorstromkurve mit / bezeichnet sind. Aus der Unregelmäßigkeit des Ankerstromsignals / ist erkennbar, daß in diesem nicht nur das Stromrippelsignal enthalten ist, sondern daß dieses durch andere Schwingungen überlagert ist, beispielsweise der Bordnetzwelligkeit eines Kraftfahrzeuges, wenn der Gleichstrommotor etwa als Fensterhebermotor in einem Kraftfahrzeug eingesetzt ist.

Die das Ankerstromsignal / überlagernden Schwingungen etwa der Bordnetzwelligkeit machen sich auch in der Motorspannungskurve U bemerkbar. Die im Ankerstromsignal / enthaltenen Stromrippel sind im Motorspannungssignal U nicht oder sehr viel abgeschwächter enthalten. Diese Zusammenhänge werden nunmehr zur Ermittlung der Stromrippelfrequenz ausgenutzt. Zu diesem Zweck wird etwa im Wege einer Fast-Fourier-Transformation das Motorspannungssignal U in den Frequenzbereich transformiert, so daß auf diese Weise eine Spektralanalyse vorgenommen werden kann. Entsprechend erfolgt ebenfalls eine Transformation des Ankerstromsignales / in den Frequenzbereich. Die beiden Frequenzspektren der Motorspannung sowie des Motorstromes sind an entsprechender Stelle rechts neben dem zuvor genannten Diagramm aufgetragen. Die beiden Frequenzspektren reflektieren die am Zustandekommen der jeweiligen Kurven U, / beteiligten Schwingungsfrequenzen. Durch eine Subtraktion dieser beiden Frequenzspektren voneinander werden die in beiden Frequenzspektren enthaltenen Störschwingungen eliminiert, so daß im Ergebnis die Stromrippelfrequenz, die maßgeblich im Ankerstromsignal / enthalten ist, übrig bleibt. Diese kann anschließend einer nachfolgenden Auswertung, beispielsweise zur Ermittlung der aktuellen Drehzahl des Gleichstrommotors und einer nachgeschalteten Positionsbestimmung seiner Antriebswelle oder eines von ihr angetriebenen Elementes unterzogen werden.

In dem Diagramm der Figur 1 unten links ist die um die Störschwingungen, etwa die Bordnetzwelligkeit bereinigte Motorspannung U sowie das entsprechend bereinigte Ankerstromsignal / aufgetragen. In dem Ankerstromsignal / ist nunmehr ausschließlich die Welligkeit der Stromrippel wiedergegeben. Dieses Diagramm verdeutlicht lediglich das Ergebnis der durchgeführten Differenzbildung der beiden in diesem Ausführungsbeispiel benutzten Frequenzspektren.

Bei einer drehzahlbezogenen Überwachung der Stromrippelfrequenz können die Änderungen der Stromrippelfrequenz überwacht werden, wobei die die Stromrippelfrequenz überlagernde Störeinflüsse von einer solchen Änderung unberücksichtigt bleiben. Solche Störeinflüsse, die durch den Kommutator bedingt sind, verändern bei einer Drehzahländerung ebenfalls ihre Frequenz, so daß diese grundsätzlich auch beobachtet werden können.

Bei Auftreten von Fehl- oder Doppelrippeln verändert sich die Frequenz der Stromrippeln sprunghaft, so daß auch dieses ohne weiteres mit dem beschriebenen Verfahren detektierbar ist. Fehl- oder Doppelrippel machen sich nur kurzzeitig bemerkbar und können beispielsweise aufgrund dieser Eigenschaft im Störfrequenzspektrum erkannt werden.

## Patentansprüche

1. Verfahren zum Bestimmen der Frequenz der im Ankerstromsignal eines kommutierten Gleichstrommotors enthaltenen Stromrippel, **dadurch gekennzeichnet, daß** die Bestimmung der Frequenz der im Ankerstromsignal enthaltenen Stromrippel über eine Differenzbildung zwischen dem durch eine Spektralanalyse des Ankerstromsignals gewonnenen Ergebnis und dem Ergebnis einer weiteren Spektralanalyse einer elektrischen Motorbetriebsgröße erfolgt.

2. Verfahren nach Anspruch 1, **dadurch gekennzeichnet, daß** vor dem Durchführen der Spektralanalyse das analoge Ankerstromsignal digitalisiert wird.

3. Verfahren nach Anspruch 1 oder 2, **dadurch gekennzeichnet, daß** zum Durchführen der Spektralanalyse das digitalisierte Ankerstromsignal mittels einer Fast-Fourier-Transformation in seinen Frequenzbereich transformiert wird.

4. Verfahren nach einem der Ansprüche 1 bis 3, **dadurch gekennzeichnet, daß** in die weitere Spektralanalyse als elektrische Motorbetriebsgröße die Motorspannung eingeht.

5. Verfahren nach einem der Ansprüche 1 bis 3, **dadurch gekennzeichnet, daß** in die weitere Spektralanalyse als elektrische Motorbetriebsgröße gleichfalls das Ankerstromsignal eingeht, wobei die beiden Spektralanalysen bei unterschiedlichen Betriebszuständen des Gleichstrommotors durchgeführt werden.

6. Verfahren nach einem der Ansprüche 1 bis 5, **dadurch gekennzeichnet, daß** eine Bestimmung der Frequenz der im Ankerstromsignal enthaltenen Stromrippel bei jeden Anfahren des Gleichstrommotors durchgeführt wird.

7. Verfahren nach einem der Ansprüche 1 bis 6, **dadurch gekennzeichnet, daß** über die Frequenz der in dem Ankerstrom enthaltenen Stromrippel eine Bestimmung der Drehstellung der Antriebswelle des Gleichstrommotors erfolgt, indem nach der Bestimmung der Frequenz der Stromrippel in dem Ankerstromsignal aus dieser die aktuelle Drehzahl des Gleichstrommotors und über die Drehzahl die aktuelle Position der Antriebswelle des Gleichstrommotors ermittelt wird.

8. Verfahren nach Anspruch 7, **dadurch gekennzeichnet, daß** die Verfahrenschritte in jeden Zeitpunkt der digitalen Abtastung des analogen Ankerstromsignals vorgenommen werden.

9. Verfahren nach Anspruch 7 oder 8, **dadurch gekennzeichnet, daß** die bei einem Betrieb des Gleichstrommotors auftretende Frequenz seiner Stromrippel im Hinblick auf Änderungen dieser Frequenz überwacht wird und eine weitere Auswertung durch eine Differenzbetrachtung zu einer oder mehreren zuvor ermittelten Stromrippelfrequenzen erfolgt.

10. Verfahren nach Anspruch 9, **dadurch gekennzeichnet, daß** die bei dem Betrieb des Gleichstrommotors auftretende aktuelle Frequenz der im Ankerstromsignal enthaltenen Stromrippel im Hinblick auf sprunghafte Änderungen dieser Frequenz überwacht und bei einer Detektion einer solchen sprunghaften Änderung der aktuellen Stromrippelfrequenz eine Korrektur des Stromrippelzählergebnisses durchgeführt wird.

## Claims

1. Process for determining the frequency of the current ripples incorporated in the armature current signal of a commutated direct current motor, **characterised by the fact** that the determination of the frequency of the current ripples incorporated in the armature current signal is carried out by taking the difference between the result obtained by means of a spectral analysis of the armature current signal and the result of an additional spectral analysis of a performance quantity of an electrical motor.

2. Process in accordance with Claim 1, **characterised by the fact** that the analogue armature current signal is digitalised prior to conducting the spectral analysis.

3. Process in accordance with Claim 1 or Claim 2, **characterised by the fact** that, in order to conduct the spectral analysis, the digitalised armature current signal is transformed to its frequency range by means of a fast-Fourier transformation.

4. Process in accordance with any of Claims 1 to 3, **characterised by the fact** that the motor voltage is incorporated in the additional spectral analysis as a performance quantity of an electrical motor.

5. Process in accordance with any of Claims 1 to 3, **characterised by the fact** that the armature current signal is likewise incorporated in the additional spectral analysis as a performance quantity of an electrical motor, for which purpose the two spectral analyses are conducted at different operating states of the direct current motor.

6. Process in accordance with any of Claims 1 to 5, **characterised by the fact** that a determination of the frequency of the current ripples incorporated in the armature current signal is conducted each time the direct current motor is started.

7. Process in accordance with any of Claims 1 to 6, **characterised by the fact** that, by means of the frequency of the current ripples contained in the armature current, a determination of the rotational position of the drive shaft of the direct current motor is conducted after determining the frequency of the current ripples in the armature current signal by ascertaining from the same the prevailing rotational speed of the direct current motor and the prevailing position of the drive shaft of the direct current motor by means of the rotational speed.

8. Process in accordance with Claim 7, **characterised by the fact** that the process steps are carried out at every instant of the digital scanning of the analogue armature current signal.

9. Process in accordance with Claim 7 or Claim 8, **characterised by the fact** that the frequency of its current ripples occurring while the direct current motor is in operation is monitored in view of changes in this frequency, and an additional analysis takes place by way of monitoring the difference in respect of one or more previously determined current ripple frequencies.

10. Process in accordance with Claim 9, **characterised by the fact** that the prevailing frequency of the current ripples incorporated in the armature current signal that arise while the direct current motor is in operation is monitored as regards sudden changes in this frequency and, upon detection of such a sudden change in the prevailing current ripple frequency, a correction of the result of the current ripple count is carried out.

## Revendications

1. Procédé pour la détermination de la fréquence des ripples de courant contenues dans le signal de courant d'induit d'un moteur à courant continu à collecteur, **caractérisé en ce que** la détermination de la fréquence des ripples de courant contenues dans le signal de courant d'induit est effectuée par une soustraction qui établit la différence entre le résultat obtenu par une analyse spectrale du signal de courant d'induit et le résultat d'une autre analyse spectrale d'un paramètre électrique d'exploitation du moteur.

2. Procédé selon la revendication 1, **caractérisé en ce que** le signal de courant d'induit analogique est numérisé avant l'exécution de l'analyse spectrale.

3. Procédé selon revendication 1 ou 2, **caractérisé en ce que,** pour l'exécution de l'analyse spectrale, le signal de courant d'induit numérisé est transformé au moyen d'une transformation Fast-Fourier dans sa gamme de fréquences.

4. Procédé selon l'une des revendications 1 à 3, **caractérisé en ce que,** dans l'autre analyse spectrale, la tension du moteur est prise en compte, en tant que paramètre d'exploitation du moteur.

5. Procédé selon l'une des revendications 1 à 3, **caractérisé en ce que,** dans l'autre analyse spectrale, le signal de courant d'induit est également pris en compte en tant que paramètre électrique d'exploitation du moteur, les deux analyses spectrales étant exécutées à des états de fonctionnement différents du moteur à courant continu.

6. Procédé selon l'une des revendications 1 à 5, **caractérisé en ce qu'**une détermination de la fréquence des ripples de courant contenues dans le signal de courant d'induit est exécutée lors de chaque démarrage du moteur à courant continu.

7. Procédé selon l'une des revendications 1 à 6, **caractérisé en ce que,** par l'intermédiaire de la fréquence des ripples de courant contenues dans le signal de courant d'induit, une détermination de la position de rotation de l'arbre de commande du moteur à courant continu est effectuée, la vitesse de rotation actuelle du moteur à courant continu étant déterminée à partir de la fréquence des ripples de courant dans le signal de courant d'induit, après la détermination de celle-ci, et la position actuelle de l'arbre de commande du moteur à courant continu étant déterminée par l'intermédiaire de la vitesse de rotation la fréquence des ripples de courant du signal de courant d'induit.

8. Procédé selon a revendication 7, **caractérisé en ce que** les étapes du procédé sont effectuées à chaque moment du balayage numérique du signal de courant d'induit analogique.

9. Procédé selon revendication 7 ou 8, **caractérisé en ce que** la fréquence des ripples de courant du moteur à courant continu, se produisant pendant son fonctionnement, est contrôlée en ce qui concerne des modifications de cette fréquence, et qu'une autre évaluation est effectuée par une observation de la différences par rapport à une ou à plusieurs fréquences de ripples de courant déterminées auparavant.

10. Procédé selon la revendication 9, **caractérisé en ce que** la fréquence actuelle des ripples de courant du moteur à courant continu, se produisant pendant son fonctionnement, est contrôlée en ce qui concerne des modifications brusques de cette fréquence, et que, lors de la détection d'une telle modification brusque de la fréquence actuelle des ripples de courant, une correction du résultat du comptage des ripples de courant est effectuée.
